# EUROPEAN PATENT SPECIFICATION

(11) **EP 4 368 994 B1**
(45) Date of publication and mention of the grant of the patent: **30.09.2026**
(21) Application number: 22206135.0
(22) Date of filing: 08.11.2022
(51) Int. Cl.: G01N 35/00, B01L 9/00

(54) **A GRIPPING DEVICE CONFIGURED FOR GRIPPING A SLIDE**
GREIFVORRICHTUNG ZUM GREIFEN EINES OBJEKTTRÄGERS
DISPOSITIF DE PRÉHENSION CONÇU POUR SAISIR UNE LAME DE MICROSCOPIE

(43) Date of publication of application: 15.05.2024
(73) Proprietor: Roche Diagnostics GmbH, 68305 Mannheim (DE); F. Hoffmann-La Roche AG, 4070 Basel (CH)
(72) Inventor: Leinberger, Falko, 68305 Mannheim (DE); Osswald, Denny, 68305 Mannheim (DE); Soccio, Timeo, 68305 Mannheim (DE)
(74) Representative: Altmann Stößel Dick Patentanwälte PartG mbB

(56) References cited:
- WO-A1-2020/180689
- CN-A- 112 269 029
- JP-A- 2017 021 275
- US-A1- 2010 254 854
- US-A1- 2012 002 277

## Description

### Technical Field

The present disclosure relates to a gripping device configured for gripping at least one slide, a slide transfer apparatus, a method for gripping at least one slide, a method for releasing at least one slide, a method for transferring at least one slide from at least one storage device to at least one receiving device and to a method for imaging a plurality of slides. Herein, the slide imaging apparatus can, preferably be used in digital pathology; however, further uses are feasible.

### Background art

A slide imaging apparatus comprises an imaging device which is configured to generate an image of a sample mounted on a slide. The image generated by a modem imaging device is, typically, a digital image, and such an image may, therefore, be referred to as a "digital slide". Typically, the sample mounted on the slide is a biological specimen, such as a tissue sample. Typically the slide is a glass slide. Typically, a slide imaging apparatus is used in digital pathology, which can be understood as an image-based information environment that enables management of information generated from a digital slide.

Where an imaging device is capable of generating an image which may cover a majority or a complete surface of a slide, e.g. by using a scanning process, the corresponding slide imaging apparatus may be referred to as a "whole slide imaging" apparatus. A slide imaging apparatus may use a 2D (two-dimensional) camera or a line scan detector to generate the image of a sample mounted on a slide. Examples of a slide imaging apparatus are, for example, described in EP 0 053 4247 B1, EP 0 245 089 A2, US 6 118 582 A, US 6 522 774 B1, US 6 640 014 B1, US 6 711 283 B1, US 7 682 573 B1, WO 2013/017855, US 8 712 116 B2 and US 9 116 035 B2.

In general, an imaging device has a capacity of processing between 1 and 1,000 slides simultaneously. Typically, a distinction can be made between an imaging device having a low throughput, which relates to a simultaneous processing of less than 10 slides, and an imaging device having a high throughput, which refers to the simultaneous processing of more than 100 slides, wherein an imaging device configured to simultaneously process 10 to 100 slides could, thus, be denoted as an imaging device having a moderate throughput. In order to charge the imaging device with one or more slides, individual slides are, typically, inserted in a manual fashion into a slide repository, particularly selected from a slide tray or a slide rack, which is, subsequently, introduced into the imaging device for generating the desired image of a sample mounted on a slide.

However, it would be desirable to be able to insert a slide into a slide reception comprised by an imaging device in an automated fashion, in particular by using an adapted supply device. For this purpose, the supply device can be or comprise a gripping device which is, typically, designed for carrying out a specific gripping task. With respect to the disclosure herein, the specific gripping task, particularly, comprises transferring the slide to the slide reception of the imaging device in a tight fashion, thereby avoiding an instability or a loss of the slide during transport.

WO 2021/191410 A1 describes a slide imaging apparatus and a method for imaging a plurality of slides. The slide imaging apparatus comprises at least one imaging device configured to generate an image of a sample mounted on a slide. The imaging device comprises at least one operating button. Further, the slide imaging apparatus comprises a storage device loadable with a plurality of slides and configured to store the slides. Further, the slide imaging apparatus comprises a supply device configured to supply the slides from the storage device to the imaging device. The supply device is configured to press the operating button.

EP 3 308 129 A1 describes a machinery for the preparation and the analysis of one or more slides according to an immunofluorescence technique. The machinery comprises a loading station suitable for the arrangement of one or more containers for the containment of test liquids and/or samples of product. Further, the machinery comprises a positioning station of one or more slides. Further, the machinery comprises a containment station of one or more slide-covers. Further, the machinery comprises an analysis station comprising a microscope for the digital acquisition of the images at one or more magnifications. Further, the machinery comprises an assembly mobile inside the area defined by said machinery and controlled in such a way as to move through said stations so as to prepare one or more slides in accordance with a predefined protocol and arrange said slide/s in the corresponding analysis station for a subsequent acquisition of one or more digital images. Further, the machinery comprises one or more covers of such a size as to be applied to cover each slide arranged in the seat. Further, the machinery comprises a container for the containment of one or more of said covers. The assembly is further controlled to operate the removal of the cover/s, once the phase of pre-dilution of the samples has been completed, and arrange it/them inside the container.

US 2007/059205 A1 describes an automated micro-well plate handling device for removing a micro-well plate from within a vertically stacked plurality of micro-well plates and transferring the removable micro-well plate to a receiving area. A vertical storage device for storing the vertically stacked plurality of micro-well plates creates a vertical clearance space between the vertically stacked micro-well plates. A shovel slides into the vertical clearance space underneath the micro-well plate that is being removed. The shovel then removes the micro-well plate from the vertical storage device and places the micro-well plate at a transfer station. A gripper then grabs the micro-well plate from the transfer station and transfers the micro-well plate to a receiving area. In a preferred embodiment, the automated micro-well plate handling device is controlled via a computer network.

WO 2012/040433 A1 describes that pathology specimen slides are positively located on trays, and picked and placed by an auto-loader. The trays are received in a rack in tiers accessed by an auto-loader that moves the slides between the trays and a digital imaging microscope. The trays can have rows of receptacles for slides with standoff structures spacing the slides above a tray bottom. Lateral and endwise partitions defining the receptacles are inclined oppositely inwardly for guiding a slide into the predetermined position on the tray. The autoloader has a manipulator that grasps the ends of slides presented in a front row, and can reach over the front row to grasp slides in one or more rows beyond the front. The manipulator lifts the slide between the inclined surfaces of the partitions, loads and later retrieves the slide from the microscope and replaces the slide in the holder.

CN 110482219 A describes a medical glass slide transferring system and method based on a machine vision. The system involves a mechanical arm, a moving vehicle and a visual positioning module, wherein the mechanical arm is arranged on the moving vehicle, the visual positioning module is in communication with the mechanical arm, the mechanical arm is in communication with the mobile vehicle, the mobile vehicle drives the mechanical arm to move to a first position, the visual positioning module is used for collecting the position information of a glass slide disc and transmitting the collected position information to the mechanical arm, and the mechanical arm realizes clamping of the glass slide disc according to the received position information.

WO 2022/ 123944 A1 describes a microscope slide conveying device comprising: an arm member provided movably in a first direction in a plane and having, at the tip thereof, a first contact member that comes into contact with a first end surface of a microscope slide; a supporting plate having a second contact member that comes into contact with a second end surface opposite the first end surface of the microscope slide in the first direction, and being for supporting the microscope slide from below; a driving part for driving the arm member movably in the first direction; and an impelling member provided between the driving part and the arm member, wherein when the arm member has moved to a position such that the first contact member and the second contact member are in contact with the microscope slide simultaneously, the impelling member impels the arm member in the first direction.

US 2010/0303600 A1 describes a device for mechanically seizing and setting down impact-sensitive sheets of various formats on at least one stack assembly, ready for dispatch, said device having the following features: a) a control device in the form of a multi-axis robotic arm is connected to a gripper device and means for mechanically gripping the sheets; b) the gripper device is hinged onto and suspended from the control device at a gentle incline by means of an adjustable damping device; c) the gripper device has sliding sections for the relative displacement of the means for mechanically gripping the sheets; d) the gripper device has means for determining the geometric dimensions of the sheets to be seized and for determining their set-down position; e) the gripper device has means for determining the exact positional co-ordinates of the set-down position; f) the gripper device has means for gently feeding and depositing the sheets in the set-down position.

US 2004/086368 A1 describes grasping mechanisms, gripper apparatus/systems, and related methods. Grasping mechanisms that include stops, support surfaces, and height adjusting surfaces to determine three translational axis positions of a grasped object are provided. In addition, grasping mechanisms that are resiliently coupled to other gripper apparatus components are also described.

US2012002277 A1 describes a slide glass storage device, a conveying device and a microscope system, and is suitable for application, for example, to the field of observing a biological sample (living body sample) through magnification. The slide glass storage device is including a supply tray which has a supply holding space determined by a longer edge upper limit allowed for a longer edge of a slide glass and a shorter edge upper limit allowed for a shorter edge of the slide glass and on which a slide glass to be supplied to a treatment unit operable to perform a predetermined treatment is mounted; a discharge tray which has a discharge holding space determined by a longer edge longer than the longer edge upper limit and a shorter edge longer than the shorter edge upper limit and on which a slide glass having been subjected to the treatment in the treatment unit and being to be discharged is mounted; and a support unit supporting the supply tray and the discharge tray.

Despite the advantages achieved by the known methods and devices several technical challenges remain. Specifically, a grip may loosen during transport of the slide. Further, in in slide trays there may be limited space for gripping the slide.

### Problem to be solved

It is, therefore, desirable to provide a gripping device configured for gripping at least one slide, a slide transfer apparatus, a method for gripping at least one slide, a method for releasing at least one slide, a method for transferring at least one slide from at least one storage device to at least one receiving device and a method for imaging a plurality of slides which allow a reliable transfer of the slides.

### Summary

The aforementioned problem is addressed by a gripping device configured for gripping at least one slide, a slide transfer apparatus, a method for gripping at least one slide, a method for releasing at least one slide, a method for transferring at least one slide from at least one storage device to at least one receiving device and a method for imaging a plurality of slides with the features of the independent claims. Advantageous embodiments which might be realized in an isolated fashion or in any arbitrary combinations are listed in the dependent claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or nonoptional features of the invention.

The terms "first" and "second" may be considered as nomenclature only, without numbering or ranking the named elements, without specifying an order and without excluding a possibility that several kinds of first elements or second elements may be present. Further, additional elements such as one or more third elements may be present.

The term "slide" as used herein is a broad term and is to be given its ordinary and customary meaning to a person of ordinary skill in the art and is not to be limited to a special or customized meaning. The term may, specifically, refer, without limitation, to a substrate which is designated for a sample to be mounted on a surface of the slide. The term "sample" as used herein is a broad term and is to be given its ordinary and customary meaning to a person of ordinary skill in the art and is not to be limited to a special or customized meaning. The term may, specifically, refer, without limitation, to a biological specimen, such as a tissue sample. However, other kinds of samples may also be feasible.

In particular for a purpose of carrying the sample without any changes during the processing to the slide, the substrate is mechanically stable and can, therefore, comprise any material which provides sufficient mechanical stability. In particular for a purpose of carrying a biological specimen, the substrate may preferably exhibit a surface which is configured to be compatible with biological material. By way of example, the slide is a glass slide since glass is known, on one hand, to provide sufficient mechanical stability and, on the other hand, to have a high compatibility with biological material. However, further kinds of materials for the slides may also be feasible.

Further, the slide may, in particular, have a form which may enable imaging of the sample mounted on the slide. For a purpose of generating a desired image of the sample, the slide may, preferably, be a plate having a 2D extension and a thickness, wherein the 2D extension of the plate may, preferably, exhibit a rectangular or circular form, and wherein the thickness of the plate may be small compared to a size of the extension, preferably 20 %, more preferred 10 %, in particular 5 %, or less than a measure for a linear extent of the 2D extension of the plate. Further, the slide may comprise at least one spring leaf, specifically at least one plastic spring leaf, configured for interacting with a gripping device which will further be described below in more detail.

Exemplarily, the slide may have a length of 76 mm, a width of 25 mm and a thickness of 1 mm. However, also other dimensions may be feasible.

The slide, specifically a plurality of slides, may be received in a slide tray such as for storing, sample preparation or imaging. The term "slide tray" as used herein is a broad term and is to be given its ordinary and customary meaning to a person of ordinary skill in the art and is not to be limited to a special or customized meaning. The term may, specifically, refer, without limitation, to an element configured to hold at least one slide or a slide holder, in particular during the scanning of the at least one slide in an imaging device. The slide tray may specifically comprise at plurality of receptacles. A receptacle may be configured for receiving one slide, specifically a single slide. The receptacles may respectively comprise a frame configured for holding a slide, specifically for holding a slide in a horizontal orientation.

In a first aspect of the present invention, a gripping device for gripping at least one slide is disclosed. The gripping device comprises at least one first gripping element. The first gripping element comprises at least one first contact surface for gripping the slide. Further, the gripping device comprises at least one second gripping element. The second gripping element comprises at least one second contact surface for gripping the slide. The second gripping element further comprises at least two protrusions which respectively extend essentially perpendicular to the second contact surface. The at least two protrusions are located on opposing ends of the second contact surface. The at least two protrusions are configured for centering the slide during gripping the slide via the gripping device. The first gripping element and the second gripping element are linearly movable relative to one another. The first contact surface of the first gripping element and the second contact surface of the second gripping element face each other.

The term "gripping device" as used herein is a broad term and is to be given its ordinary and customary meaning to a person of ordinary skill in the art and is not to be limited to a special or customized meaning. The term may, specifically, refer, without limitation, to a mechanical element which is, typically, designed for seizing an object, transferring it to a desired location and to release the object at the desired location. With respect to the disclosure herein, the specific gripping device may, thus, be configured to grip a slide, to transfer it to a slide reception of a device such as to an imaging device in a tight fashion, thereby avoiding an instability or a loss of the slide during transport, and to release it, preferably to a slide tray.

The term "gripping element" as used herein is a broad term and is to be given its ordinary and customary meaning to a person of ordinary skill in the art and is not to be limited to a special or customized meaning. The term may, specifically, refer, without limitation, to a component or a part of a gripping device. The component may be handled independently or may be coupled, connectable or integratable in order to fulfill at least one common function. As outlined above, the gripping device comprises the first gripping element and the second gripping element. The first gripping element and the second gripping element may respectively serve as pliers for gripping the slide. Further details on the first gripping element and the second gripping element are given below in more detail.

As outlined above, the first gripping element comprises the first contact surface and the second gripping element comprises the second contact surface. The term "contact surface" as used herein is a broad term and is to be given its ordinary and customary meaning to a person of ordinary skill in the art and is not to be limited to a special or customized meaning. The term may, specifically, refer, without limitation, to an arbitrary surface which is configured to get in direct contact with an object, particularly with a surface or part of a surface of the object. Therefore, the object may be configured to lie slackly on the contact surface. The first contact surface of the first gripping element and the second contact surface of the second gripping element may be substantially plane.

The slide may comprise at least one sample surface being configured for receiving at least one sample and at least one opposing rear surface. The first contact surface of the first gripping element may be configured get in contact with the rear surface. The second contact surface of the second gripping element may be configured to get in contact with the sample surface.

The slide may specifically have a rectangular base shape having two longitudinal sides and two end faces. The slide may be an elongate element extending along a longitudinal axis. The longitudinal sides may extend essentially parallel to the longitudinal axis and the end faces may extend perpendicular to the longitudinal axis. The gripping device may be configured for gripping the slide on one of the end faces of the slide.

Specifically, the first contact surface and the second contact surface may respectively be essentially parallel to the sample surface and the opposing rear surface of the slide when the slide is gripped with the gripping device. Thereby, the term "essentially parallel" may refer to a property of first contact surface and the second contact surface of being parallel to the sample surface and the opposing rear surface of the slide. Exemplarily, the first contact surface and the second contact surface may respectively be exactly parallel to the sample surface and the opposing rear surface of the slide. However, small deviations may be feasible. Specifically, the first contact surface and the second contact surface may respectively be arranged at an angle of +/- 20°, preferably of +/- 10°, more preferably of +/- 5° to sample surface and the opposing rear surface of the slide.

The first contact surface and the second contact surface may respectively be in direct contact with only a part of the sample surface and the opposing rear surface of the slide. Thus, a region of the sample surface being covered by the sample may not be in contact with the second contact surface.

As outlined above, the first gripping element and the second gripping element are linearly movable relative to one another. Specifically, the first gripping element and the second gripping element may be exclusively linearly movable relative to one another. Exemplarily, the first gripping element may rest while the second part moves. Alternatively, the first gripping element may move and the second gripping element may rest. Moreover, the first gripping element and the second gripping element may move, respectively. The term "linearly moveable" may specifically refer to a property of an element of being designed to provide free motion in one direction, specifically on a straight line. Specifically, it is referred to an element which can be moved on a straight line.

The first contact surface and the second contact surface may be oriented essentially parallel to each other. Thereby, the term "essentially parallel" may refer to a property of the first contact surface of being parallel to the second contact surface. Exemplarily, the first contact surface may be exactly parallel to the second contact surface. However, small deviations may be feasible. Specifically, the first contact surface may be arranged at an angle of +/- 20°, preferably of +/- 10°, more preferably of +/- 5° to the second contact surface. Before gripping the slide with the gripping device, the first contact surface and the second contact surface may be arranged at a distance to each other which is larger than a thickness of the slide, specifically by at least a factor of 2, preferably by at least a factor of 3. When the slide is gripped with the gripping device, the slide may be arranged between the first contact surface and the second contact surface. Thus, the first contact surface and the second contact surface may be arranged in a distance to each other which may be essentially equivalent to a thickness of the slide.

The first gripping element may be movable in a direction essentially perpendicular to the second contact surface of the second gripping element. The second gripping element may be moveable in a direction essentially perpendicular to the first contact surface of the first gripping element. The term "essentially perpendicular" may comprise slight deviations from a perpendicular arrangement such as arrangements which deviate from a perpendicular arrangement by no more than 10 degrees, preferably by no more than 5 degrees.

Further, the gripping device may comprise at least one actuator for driving a relative movement of the first gripping element and the second gripping element. As further used herein, the term "actuator" refers to an arbitrary element which is configured to move or control a mechanism or a system. The actuator may be operated by a source of energy, typically electric current or mechanical pressure and may convert energy into motion. The actuator may be selected from the group consisting of: a mechanical actuator, an electromagnetic actuator, a pneumatic actuator. However, other kinds of actuators may be applied.

The actuator may be configured for performing a predetermined sequence of movements, sequentially bringing the first gripping element and the second gripping element into at least two positions, specifically into a closed position and into an open position. Further, the actuator may be configured for stopping the movement in one of the at least two positions. The open position may refer to a position of the first gripping element and the second gripping element relative to each other wherein the first contact surface and the second contact surface are arranged at a distance to each other which is larger than a thickness of the slide, specifically by at least a factor of 2, preferably by at least a factor of 3. The open position may specifically refer to a position before the slide is gripped. The closed position may refer to a position of the first gripping element and the second gripping element relative to each other wherein the first contact surface and the second contact surface are arranged at a distance to each other which is essentially equivalent to a thickness of the slide. In the closed position, the slide may be arranged between the first contact surface and the second contact surface.

As outlined above, the first contact surface of the first gripping element and the second contact surface of the second gripping element face each other. The first contact surface and the second contact surface may be arranged opposite to each other. As will be outlined in further detail below, the first contact surface and the second contact surface may be shaped differently. Thus, the first contact surface and the second contact surface may be arranged opposite to each other with offset.

The first contact surface of the first gripping element may have a rectangular base shape. Specifically, the first contact surface may have a rectangular shape. The term "rectangular base shape" generally refers to an arbitrary shape, wherein at least parts of the shape may be rectangular. However, the shape may at the same time also comprise further characteristics such as, exemplarily, rounded corners. The first contact surface of the first gripping element may have a length and a width. The length may exceed the width by at least a factor of 1.5, preferably by a factor of at least 2, most preferably by a factor of at least 2.5. Exemplarily, the first contact surface may have a length of 8 mm to 20 mm, preferably of 10 mm to 17 mm and most preferably of 14 mm. Further, exemplarily, the first contact surface may have a width of 2 mm to 10 mm, preferably of 4 mm to 6 mm and most preferably of 5 mm. Exemplarily, the first contact surface may have a length of 14 mm and a width of 5 mm. However, also other dimensions may be feasible.

The first gripping element may comprise at least one first contact component having the first contact surface and at least one first guiding component being configured for guiding the first contact component. The first contact component and the first guiding component may be attached to each other, preferably materially bonded. The first contact component and the first guiding component may be manufactured as one single piece. The first contact component may be rigidly connected to the first guiding component. Thus, a movement of the first contact component relative to the first guiding component such as a rotational movement or a translational movement may not be possible.

The term "component" as used herein is a broad term and is to be given its ordinary and customary meaning to a person of ordinary skill in the art and is not to be limited to a special or customized meaning. The term specifically may refer, without limitation, to a part or an area of an arbitrary object.

As further used herein, the term "guiding element" is a broad term and is to be given its ordinary and customary meaning to a person of ordinary skill in the art and is not to be limited to a special or customized meaning. The term specifically may refer, without limitation, to an arbitrary element which is configured to support a movement of an element within a desired direction. The first guiding component may be configured for attachment to at least one actuator configured for enabling a linear movement of the first gripping element.

As further used herein, the term "contact element" is a broad term and is to be given its ordinary and customary meaning to a person of ordinary skill in the art and is not to be limited to a special or customized meaning. The term specifically may refer, without limitation, to an arbitrary element which is configured for getting in direct contact with another object. Thus, the contact element may have at least one contact surface which may serve as supporting surface for the object.

The first guiding component may be an elongate element and the first contact surface may be arranged essentially perpendicular to a longitudinal axis of the first guiding component. The term "essentially perpendicular" may comprise slight deviations from a perpendicular arrangement such as arrangements which deviate from a perpendicular arrangement by no more than 10 degrees, preferably by no more than 5 degrees.

The first gripping device may have an L-shape. The first guiding component may correspond to a longer arm of the L, which may also be referred to as vertical arm of the L. The first contact component may correspond to a short arm of the L, which may specifically also be referred to as horizontal arm of the L. The first gripping device may have the L-shape in a side view. In the side view, a longer side of the contact surface having the rectangular base shape may extend along an axis of extension of the short arm of the L. Further, in the side view, a shorter side of the contact surface having the rectangular base shape may extend essentially perpendicular to the axis of extension of the short arm of the L.

The first contact component may comprise at least one surface opposing the first contact surface. The surface may also be referred to as rear surface. The surface may be arranged at an angle smaller than 90° to the longitudinal axis of the first guiding component. The surface may specifically be arranged at an angle of 80° to 89° to the longitudinal axis of the first guiding component. Thus, a guiding of the first contact component below a slide in a slide tray may be facilitated.

The first guiding component may comprise at least one hole, specifically at least one drill hole. The hole may extend along the longitudinal axis of the first guiding component. The hole may extend along at least 20%, preferably along at least 30% and most preferably along at least 40% of a length of the first guiding component. Further, a diameter of the hole may correspond to at least 20%, preferably to at least 30% and most preferably to at least 40% of a mean diameter of the first guiding component. The hole may be configured for stiffening of the first guiding element.

The first contact component may comprise at least one first end and at least one second end. The first guiding component may be attached to the first contact component on the second end. A thickness of the first contact component may gradually decrease from the second end to the first end. A connecting area between the first contact component and the first guiding component may comprise at least one rounded corner. Thus, a guiding of the first contact component below a slide in a slide tray may be facilitated.

The first gripping element may comprise at least one further contact surface. The further contact surface may be a surface of the first guiding component. The further contact surface may be arranged essentially perpendicular to the first contact surface. The term "essentially perpendicular" may comprise slight deviations from a perpendicular arrangement such as arrangements which deviate from a perpendicular arrangement by no more than 10 degrees, preferably by no more than 5 degrees. The further contact surface may be configured for providing a counterforce for the slide. The first guiding component may be tapered in an area of the further contact surface.

The second contact surface may extend in a plane being defined by an axis x and an axis y which are arranged perpendicular to each other. The second contact surface may comprise at least one first area and at least one second area. The first area and the second area may respectively have different lengths along the axis x and the axis y. The first area and the second area may respectively have an essentially rectangular shape. The first area and the second area may seamlessly merge into each other. The first area and the second area may extend along the same plane. The second area may be centered aligned to the first area. The second area may be configured for distributing a holding force on the slide.

The second contact surface may essentially have a T-shape. The first area may correspond to a horizontal arm of the T. The second area may correspond to a vertical arm of the T.

The first area may have a length *l₁₁* along the axis x and a length *l₁₂* along the axis y and the second area may have a length *l₂₁* along the axis x and a length *l₂₂* along the axis y. The length *l₂₁* may be larger than the length *l₁₁,* specifically by at least a factor of 1.5, preferably by at least a factor of 1.7, most preferably by at least a factor of 1.9. The length *l₁₂* may be larger than the length *l₂₂,* specifically by at least a factor of 2, preferably by at least a factor of 3, most preferably by at least a factor of 5. The length *l₁₂* may be larger than the length *l₁₁,* specifically by at least a factor of 2, preferably by at least a factor of 3, most preferably by at least a factor of 3.5. The length *l₂₁* may be larger than the length *l₂₂,* specifically by at least a factor of 1.5, preferably by at least a factor of 2, most preferably by at least a factor of 2.5. The length *l₁₂* may be essentially equal to a width of the slide. Exemplarily, the length *l₁₁* may be 3 mm to 15 mm, preferably 5 mm to 10 mm and most preferably 6 mm. Further, exemplarily, the length *l₁₂* may be 25 mm to 27 mm, preferably 25.1 mm to 25.8 mm and most preferably 25.5 mm. Further, exemplarily, the length *l₂₁* may be 5 mm to 20 mm, preferably 8 mm to 15 mm and most preferably 10 mm. Further, exemplarily, the length *l₂₂* may be 2 mm to 10 mm, preferably 4 mm to 6 mm and most preferably 5 mm. Exemplarily, the length *l₁₁* may be 6 mm, the length *l₁₂* may be 25.5 mm, the length *l₂₁* may be 10 mm and the length *l₂₂* may be 5 mm. However, also other dimensions may be feasible.

As outlined above, the first contact surface of the first gripping element may have a rectangular basic shape with a length and a width. The length may be larger than the width. A longer side of the first contact surface of the first gripping element may extend along the axis x. The longer side of the first contact surface of the first gripping element may extend essentially parallel to a side of the first area having the length *l₁₁* and essentially parallel to a side of the second area having the length *l₂₁.* A shorter side of the first contact surface of the first gripping element may extend along the axis y. The shorter side of the first contact surface of the first gripping element may extend essentially parallel to a side of the first area having the length *l₁₂* and essentially parallel to a side of the second area having the length *l₂₂*. When the slide is gripped by the gripping device and arranged between the first contact surface and the second contact surface, a longer side of the slide may extend along the axis x. The longer side of the slide may extend essentially parallel to a side of the first area having the length *l₁₁,* essentially parallel to a side of the second area having the length *l₂₁* and essentially parallel to the longer side of the first contact surface of the first gripping element. Further, when the slide is gripped by the gripping device and arranged between the first contact surface and the second contact surface, a longer side of the slide may extend along the axis x. The longer side of the slide may extend essentially parallel to the side of the first area having the length *l₁₂,* essentially parallel to a side of the second area having the length *l₂₂* and essentially parallel to the shorter side of the first contact surface of the first gripping element.

The second gripping element may comprise at least one second contact component having the second contact surface and at least one second guiding component being configured for guiding the second contact component. Concerning the terms "contact component" and "guiding component" reference is made to the description above. The second contact component and the second guiding component may be attached to each other, preferably materially bonded. The second contact component and the second guiding component may be manufactured as one single piece. The second contact component may be rigidly connected to the second guiding component. Thus, a movement of the second contact component relative to the second guiding component such as a rotational movement or a translational movement may not be possible.

The second guiding component may be configured for attachment to at least one actuator configured for enabling a linear movement of the second gripping element.

The second guiding component may be an elongate element. The second guiding element may comprise at least one first end and at least one opposing second end and the second contact surface may be arranged at the first end of the second guiding element. The second guiding component may taper from the first end to the second end.

The second contact surface may be arranged essentially perpendicular to a longitudinal axis of the second guiding component. The term "essentially perpendicular" may comprise slight deviations from a perpendicular arrangement such as arrangements which deviate from a perpendicular arrangement by no more than 10 degrees, preferably by no more than 5 degrees.

As outlined above, the second gripping element comprises at least two protrusions which respectively extend essentially perpendicular to the second contact surface. Specifically, the second gripping element comprises two protrusions which respectively extend essentially perpendicular to the second contact surface. The at least two protrusions are located on opposing ends of the second contact surface. The at least two protrusions are configured for centering the slide during gripping the slide via the gripping device. The term "protrusion" as used herein is a broad term and is to be given its ordinary and customary meaning to a person of ordinary skill in the art and is not to be limited to a special or customized meaning. The term specifically may refer, without limitation, to at least one element protruding outwards at least one surface of an element, in particular perpendicular to the surface of the element. The term "essentially perpendicular" may comprise slight deviations from a perpendicular arrangement such as arrangements which deviate from a perpendicular arrangement by no more than 10 degrees, preferably by no more than 5 degrees.

The protrusions may respectively have a rectangular base shape. The term "rectangular base shape" generally refers to an arbitrary shape, wherein at least parts of the shape may be rectangular. However, the shape may at the same time also comprise further characteristics such as, exemplarily, rounded corners. The protrusions may respectively have a first length and a second length. The first length may specifically correspond to the length *l₁₁* of the first area. Exemplarily, the first length may be 3 mm to 15 mm, preferably 5 mm to 10 mm and most preferably 6 mm. Further, exemplarily, the second length may be 1 mm to 5 mm, preferably 2 mm to 4 mm and most preferably 3 mm. Exemplarily, the first length may be 6 mm and the second length may be 3 mm. However, also other dimensions may be feasible.

A distance between the at least two protrusions may be essentially equal to a width of the slide. The term "essentially equal" may refer to a distance between the at least two protrusions equal to the width of the slide. Further, the term may refer to a distance between the at least two protrusions slightly larger than the width of the slide.

The at least two protrusions may be located on opposing ends of the first area of the second contact surface. A length of the protrusions may correspond to the length *l₁₁* of the first area. The protrusions may extend along an axis z being perpendicular to the axis x and the axis y.

The first guiding component of the first gripping element and the second guiding component of the second gripping element may be arranged parallel to each other. The first guiding component and the second guiding component may be arranged in a distance to each other. The first guiding component and the second guiding component may both extend in a same direction. The first guiding component and the second guiding component may respectively extend along the axis z. The second area of the second contact surface of the second gripping element may be arranged between the first guiding element and the first area of the second contact surface of the second gripping element.

In a second aspect of the present invention, a slide transfer apparatus is disclosed. The slide transfer apparatus comprises at least one storage device. The storage device is loadable with a plurality of slides and configured to store the slides. Further, the slide transfer apparatus comprises at least one receiving device. The receiving device is configured to receive slides transferred from the storage device. Further, the slide transfer apparatus comprises at least one transfer device. The transfer device is configured to transfer the slides from the storage device to the receiving device. The transfer device comprises at least one robotic arm. At least one gripping device as described above or as will further be described below in more detail is arranged at the robotic arm. The gripping device may specifically be arranged at the robotic arm by mounting the gripping device to the robotic arm or by forming the gripping device at the robotic arm.

The term "apparatus" as used herein is a broad term and is to be given its ordinary and customary meaning to a person of ordinary skill in the art and is not to be limited to a special or customized meaning. The term may, specifically, refer, without limitation, to a device having a plurality of components as disclosed below in more detail. The term "slide transfer apparatus" as used herein is a broad term and is to be given its ordinary and customary meaning to a person of ordinary skill in the art and is not to be limited to a special or customized meaning. The term may, specifically, refer, without limitation, to an arbitrary apparatus which is configured for an active transportation of an arbitrary slide from one location to another location or vice versa.

The terms "storage device" and "receiving device" as used herein are broad terms and are to be given their ordinary and customary meanings to a person of ordinary skill in the art and are not to be limited to a special or customized meaning. The term may, specifically, refer, without limitation, to a slide repository which is designated for receiving an individual slide holder or, alternatively, more than one slide holder simultaneously, wherein each slide holder is configured to hold more than one slide. In a preferred embodiment, the storage device may comprise at least two compartments, wherein each of the compartments is configured to store a portion of the slides. Herein, the compartments may comprise at least two rows which are placed in an adjacent manner, thus, storing the slides next to one another. In particular, the storage device may be selected from a slide tray or a slide rack, however, further types of storage devices may also be feasible. However, further kinds of arrangements of the slides and/or the slide holders, respectively, in the storage device may also be feasible. Thus, the storage device may be loadable with the plurality of slides, preferably, in a manual fashion, wherein, however, an automatic loading of the storage device may also be conceivable.

The term "transfer device" as used herein is a broad term and is to be given its ordinary and customary meaning to a person of ordinary skill in the art and is not to be limited to a special or customized meaning. The term may, specifically, refer, without limitation, to a device which is configured to transfer the slides from the storage device to the at least one receiving device. For this purpose, the transfer device comprises the robotic arm.

Herein, the term "robotic arm" as used herein is a broad term and is to be given its ordinary and customary meaning to a person of ordinary skill in the art and is not to be limited to a special or customized meaning. The term may, specifically, refer, without limitation, to a programmable mechanical unit having a form of at least one of a hand or an arm and configured to move in a similar manner as the hand or the arm, using an electrical and/or pneumatic drive, including but not limited to gripping at least one object, in particular a slide or a slide holder, and transferring it to a defined destination. The robotic arm may be a multi-axis robotic arm. Thus, the robotic arm may be configured for moving the gripping device in linear direction along the axis x, the axis y and the axis z. Further, the robotic arm may be configured for performing tilting movements of the gripping device.

The transfer of the slides from the storage device to the at least one receiving device is, preferably, performed in an automated fashion. The terms "in an automated fashion" and "automatedly" as used herein are broad terms and are to be given their ordinary and customary meaning to a person of ordinary skill in the art and are not to be limited to a special or customized meaning. The terms may, specifically, refer, without limitation, to a kind of process which is performed without direct interaction of a user of the slide transfer apparatus on a basis of an algorithm configured to perform the transfer of the slides without manual performance of the user.

In a third aspect of the present invention, a slide imaging apparatus is disclosed. The slide imaging apparatus comprises at least one slide transfer apparatus as described above or as will further be described below in more detail. Further, the slide imaging apparatus comprises at least one imaging device configured to generate an image of a sample mounted on a slide. The imaging device may be part of the receiving device as described above or may refer to a separate device.

The terms "imaging" or "generate an image" as used herein are broad terms and are to be given their ordinary and customary meaning to a person of ordinary skill in the art and are not to be limited to a special or customized meaning. The terms may, specifically, refer, without limitation, to providing a 2D two-dimensional representation of at least one property of the sample, also denoted by the term "image", which can, typically, be processed and displayed on a screen for being regarded by eyes of a viewer, preferably, without any further aids, apart from eyeglasses of the viewer. For this purpose an imaging device as disclosed above in more detail is, typically, used.

The term "imaging device" as used herein is a broad term and is to be given its ordinary and customary meaning to a person of ordinary skill in the art and is not to be limited to a special or customized meaning. The term may, specifically, refer, without limitation, to a device which is designated for generating a 2D representation of at least one visual property of the sample. In particular, the imaging device may be selected from a 2D camera or a line scan detector. However, further kinds of imaging devices may also be feasible. Consequently, the slide imaging apparatus according to the present invention may comprise one, two, three, four, five, six, or more individual imaging devices, wherein the at least one individual imaging device can be individually addressed by the supply device as disclosed below in more detail. Herein, the further imaging devices could, in particular, be maintained as a further backup option in case of failure of more than one imaging device.

In a fourth aspect of the present invention, a method for gripping at least one slide is disclosed.

The method comprises the following steps which specifically may be performed in the given order. Further, it is also possible to perform one or more of the method steps once or repeatedly. Further, it is possible to perform two or more of the method steps simultaneously or in a timely overlapping fashion. The method may comprise further method steps which are not listed.

The method for gripping at least one slide comprises:
a) providing at least one gripping device as described above or as will further be described below in more detail, wherein the first contact surface of the first gripping element and the second contact surface of the second gripping element are arranged in a distance to each other;
b) moving the gripping device such that the slide is arranged between the first contact surface and the second contact surface; and
c) gripping the slide via the first contact surface and the second contact surface.

In step a), the distance between the first contact surface of the first gripping element and the second contact surface of the second gripping element may be larger than a thickness of the slide, specifically by at least a factor of 2, preferably by at least a factor of 3.

In step b), the gripping device may be moved via the robotic arm. For further details on the robotic arm reference is made to the description above.

Before performing step b) the first contact surface and the second contact surface may respectively be horizontally aligned and the horizontal alignment may be maintained during performing step b). Thus, in step b), a combination of exclusively horizontal and vertical movements of the first contact surface and the second contact surface may be performed. This scenario may specifically be expedient in case there is enough space for the gripping device to be moved such that the slide is arranged between the first contact surface and the second contact surface. Specifically, there may be enough free space around the end face of the slide.

Alternatively, in step b), at least one tilting movement of the first contact surface and the second contact surface may be performed. Additionally, horizontal and vertical movements of the first contact surface and the second contact surface may be performed. This scenario may specifically be expedient in case there is only limited space for the gripping device to be moved such that the slide is arranged between the first contact surface and the second contact surface. Specifically, the slide may be arranged in a slide tray and the slide may be received in a receptacle of the slide tray and there may be free space between a frame of the slide tray and one of the end faces of the slide.

Specifically, step b) may comprise the following steps:
b1) performing at least one first tilting movement of the gripping device such that the slide is arranged between the first contact surface and the second contact surface; and
b2) performing at least one second tilting movement of the gripping device such that the first contact surface and the second contact surface are respectively aligned essentially parallel to the slide, specifically to the sample surface of the slide.

In step b), the first contact surface and the second contact surface may be respectively arranged in a distance to the slide. The distance between the first contact surface and the second contact surface may correspond to a distance between the first contact surface and the second contact surface in step a).

In step c) the slide may be clamped between the first contact surface and the second contact surface. In step c) the first contact surface and the second contact surface may respectively be or get in direct contact with the slide.

As outlined above, the first gripping element may comprise the at least one further contact surface. The further contact surface may be arranged essentially perpendicular to the first contact surface. In step b), the gripping device may be moved such that when the slide is gripped via the first contact surface and the second contact surface in step c) the slide is in direct contact with the further contact surface.

Alternatively, in step b), the gripping device may be moved such that when the slide is gripped via the first contact surface and the second contact surface in step c) the slide is arranged in a distance to the further contact surface. The distance may specifically be 1 mm to 5 mm, preferably 1.5 mm to 3 mm and most preferably 2 mm. However, also other dimensions may be feasible.

Thus, after conducting step c), the following steps may be conducted:
d1) a contact between the second contact surface and the slide is released, specifically by moving the second gripping element;
d2) the gripping device is moved in a direction towards the slide such that when the slide is gripped again via the first contact surface and the second contact surface the slide is in direct contact with the further contact surface; and
d3) gripping the slide via the first contact surface and the second contact surface.

After step c), the slide may be removed from a slide tray via the gripping device.

In a fifth aspect of the present invention, a method for releasing at least one slide is disclosed.

The method comprises the following steps which specifically may be performed in the given order. Further, it is also possible to perform one or more of the method steps once or repeatedly. Further, it is possible to perform two or more of the method steps simultaneously or in a timely overlapping fashion. The method may comprise further method steps which are not listed.

The method for releasing at least one slide comprises the following steps:
i. providing at least one gripping device as described above or as will further be described below in more detail, wherein at least one slide is gripped via the first contact surface of the first gripping element and the second contact surface of the second gripping element;
ii. placing the slide into a receptacle of a slide tray;
iii. increasing a distance between the first contact surface and the second contact surface, specifically by at least a factor of 2, preferably by at least a factor of 3; and
iv. removing the gripping device from the slide.

In steps ii. and iv., the gripping device may be moved via the robotic arm. For further details on the robotic arm reference is made to the description above.

In step ii., the slide may be placed into the receptacle of the slide tray by a combination of exclusively horizontal and vertical movements of the first contact surface and the second contact surface. Alternatively, in step ii., the slide may be placed into the receptacle of the slide tray by at least one tilting movement of the first contact surface and the second contact surface. Further, in addition to the at least one tilting movement, horizontal and vertical movements of the first contact surface and the second contact surface may be performed.

In step iv., the gripping device may be removed from the slide by a combination of exclusively horizontal and vertical movements of the first contact surface and the second contact surface. Alternatively, in step iv., the gripping device may be removed from the slide by at least one tilting movement of the first contact surface and the second contact surface. Further, in addition to the at least one tilting movement, horizontal and vertical movements of the first contact surface and the second contact surface may be performed.

In a sixth aspect of the present invention, a method for transferring at least one slide from at least one storage device to at least one receiving device is disclosed.

The method comprises the following steps which specifically may be performed in the given order. Further, it is also possible to perform one or more of the method steps once or repeatedly. Further, it is possible to perform two or more of the method steps simultaneously or in a timely overlapping fashion. The method may comprise further method steps which are not listed.

The method for transferring at least one slide from at least one storage device to at least one receiving device comprises:
I. providing the at least one slide in the storage device;
II. gripping the at least one slide via the method for gripping at least one slide as described above or as will further be described below in more detail;
III. moving the at least one slide from the storage device to the receiving device; and
IV. releasing the at least one slide via the method for releasing at least one slide as described above or as will further be described below in more detail.

In in step III., the gripping device may be moved via the robotic arm. For further details on the robotic arm reference is made to the description above.

In a seventh aspect of the present invention, a method for imaging a plurality of slides is disclosed.

The method comprises the following steps which specifically may be performed in the given order. Further, it is also possible to perform one or more of the method steps once or repeatedly. Further, it is possible to perform two or more of the method steps simultaneously or in a timely overlapping fashion. The method may comprise further method steps which are not listed.

The method for imaging a plurality of slides comprises:
A. loading a plurality of slides into a storage device and storing the slides in the storage device;
B. transferring the slides from the storage device to a receiving device via the method for transferring at least one slide as described above or as will further be described below in more detail; and
C. generating an image of a sample mounted on the slide using the imaging device.

Further disclosed and proposed herein is a computer program including computerexecutable instructions for performing one or more of the methods according to the present invention in one or more of the embodiments enclosed herein when the program is executed on a computer or computer network. Specifically, the computer program may be stored on a computer-readable data carrier and/or on a computer-readable storage medium.

Thus, specifically, one, more than one or even all of method steps a) to c), specifically of method steps b) and c), of the method for gripping at least one slide, of method steps i. to iv., specifically of method steps ii. to iv., of the method for releasing at least one slide, of method steps I. to IV., specifically of method steps II. to IV., of the method for transferring at least one slide from at least one storage device to at least one receiving device, and of method steps. A. to C. of the method for imaging a plurality of slides as indicated above may be performed by using a computer or a computer network, preferably by using a computer program.

The invention further discloses and proposes a computer program product having program code means, in order to perform more than one or even all of method steps a) to c), specifically of method steps b) and c), of the method for gripping at least one slide, of method steps i. to iv., specifically of method steps ii. to iv., of the method for releasing at least one slide, of method steps I. to IV., specifically of method steps II. to IV., of the method for transferring at least one slide from at least one storage device to at least one receiving device, and of method steps. A. to C. of the method for imaging a plurality of slides as indicated above according to the present invention in one or more of the embodiments enclosed herein when the program is executed on a computer or computer network. Specifically, the program code means may be stored on a computer-readable data carrier.

Further, the invention discloses and proposes a data carrier having a data structure stored thereon, which, after loading into a computer or computer network, such as into a working memory or main memory of the computer or computer network, may execute more than one or even all of method steps a) to c), specifically of method steps b) and c), of the method for gripping at least one slide, of method steps i. to iv., specifically of method steps ii. to iv., of the method for releasing at least one slide, of method steps I. to IV., specifically of method steps II. to IV., of the method for transferring at least one slide from at least one storage device to at least one receiving device, and of method steps. A. to C. of the method for imaging a plurality of slides as indicated above according to one or more of the embodiments disclosed herein.

The invention further proposes and discloses a computer program product with program code means stored on a machine-readable carrier, in order to perform more than one or even all of method steps a) to c), specifically of method steps b) and c), of the method for gripping at least one slide, of method steps i. to iv., specifically of method steps ii. to iv., of the method for releasing at least one slide, of method steps I. to IV., specifically of method steps II. to IV., of the method for transferring at least one slide from at least one storage device to at least one receiving device, and of method steps. A. to C. of the method for imaging a plurality of slides as indicated above according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier. Specifically, the computer program product may be distributed over a data network.

Finally, the invention proposes and discloses a modulated data signal which contains instructions readable by a computer system or computer network, for performing more than one or even all of method steps a) to c), specifically of method steps b) and c), of the method for gripping at least one slide, of method steps i. to iv., specifically of method steps ii. to iv., of the method for releasing at least one slide, of method steps I. to IV., specifically of method steps II. to IV., of the method for transferring at least one slide from at least one storage device to at least one receiving device, and of method steps A. to C. of the method for imaging a plurality of slides as indicated above according to one or more of the embodiments disclosed herein.

Preferably, referring to the computer-implemented aspects of the invention, more than one or even all of method steps a) to c), specifically of method steps b) and c), of the method for gripping at least one slide, of method steps i. to iv., specifically of method steps ii. to iv., of the method for releasing at least one slide, of method steps I. to IV., specifically of method steps II. to IV., of the method for transferring at least one slide from at least one storage device to at least one receiving device, and of method steps. A. to C. of the method for imaging a plurality of slides as indicated above according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, the present invention further discloses:
- A computer or computer network comprising at least one processor, wherein the processor is adapted to perform more than one or even all of method steps a) to c), specifically of method steps b) and c), of the method for gripping at least one slide, of method steps i. to iv., specifically of method steps ii. to iv., of the method for releasing at least one slide, of method steps I. to IV., specifically of method steps II. to IV., of the method for transferring at least one slide from at least one storage device to at least one receiving device, and of method steps A. to C. of the method for imaging a plurality of slides according to one of the embodiments described in this description,
- a computer loadable data structure that is adapted to perform more than one or even all of method steps a) to c), specifically of method steps b) and c), of the method for gripping at least one slide, of method steps i. to iv., specifically of method steps ii. to iv., of the method for releasing at least one slide, of method steps I. to IV., specifically of method steps II. to IV., of the method for transferring at least one slide from at least one storage device to at least one receiving device, and of method steps A. to C. of the method for imaging a plurality of slides according to one of the embodiments described in this description while the data structure is being executed on a computer,
- a computer program, wherein the computer program is adapted to perform more than one or even all of method steps a) to c), specifically of method steps b) and c), of the method for gripping at least one slide, of method steps i. to iv., specifically of method steps ii. to iv., of the method for releasing at least one slide, of method steps I. to IV., specifically of method steps II. to IV., of the method for transferring at least one slide from at least one storage device to at least one receiving device, and of method steps A. to C. of the method for imaging a plurality of slides according to one of the embodiments described in this description while the program is being executed on a computer,
- a computer program comprising program means for performing more than one or even all of method steps a) to c), specifically of method steps b) and c), of the method for gripping at least one slide, of method steps i. to iv., specifically of method steps ii. to iv., of the method for releasing at least one slide, of method steps I. to IV., specifically of method steps II. to IV., of the method for transferring at least one slide from at least one storage device to at least one receiving device, and of method steps A. to C. of the method for imaging a plurality of slides according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform more than one or even all of method steps a) to c), specifically of method steps b) and c), of the method for gripping at least one slide, of method steps i. to iv., specifically of method steps ii. to iv., of the method for releasing at least one slide, of method steps I. to IV., specifically of method steps II. to IV., of the method for transferring at least one slide from at least one storage device to at least one receiving device, and of method steps A. to C. of the method for imaging a plurality of slides according to one of the embodiments described in this description after having been loaded into a main and/or working storage of a computer or of a computer network, and
- a computer program product having program code means, wherein the program code means can be stored or are stored on a storage medium, for performing more than one or even all of method steps a) to c), specifically of method steps b) and c), of the method for gripping at least one slide, of method steps i. to iv., specifically of method steps ii. to iv., of the method for releasing at least one slide, of method steps I. to IV., specifically of method steps II. to IV., of the method for transferring at least one slide from at least one storage device to at least one receiving device, and of method steps A. to C. of the method for imaging a plurality of slides according to one of the embodiments described in this description, if the program code means are executed on a computer or on a computer network.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: schematically illustrates a preferred embodiment of a first gripping element of a gripping device according to the present invention;
- Figure 2: schematically illustrates a preferred embodiment of a second gripping element of a gripping device according to the present invention;
- Figure 3: schematically illustrates a preferred embodiment of a gripping device according to the present invention;
- Figures 4A to 4C: illustrate an exemplary embodiment of a method for gripping a slide according to the present invention.

### Detailed description of the embodiments

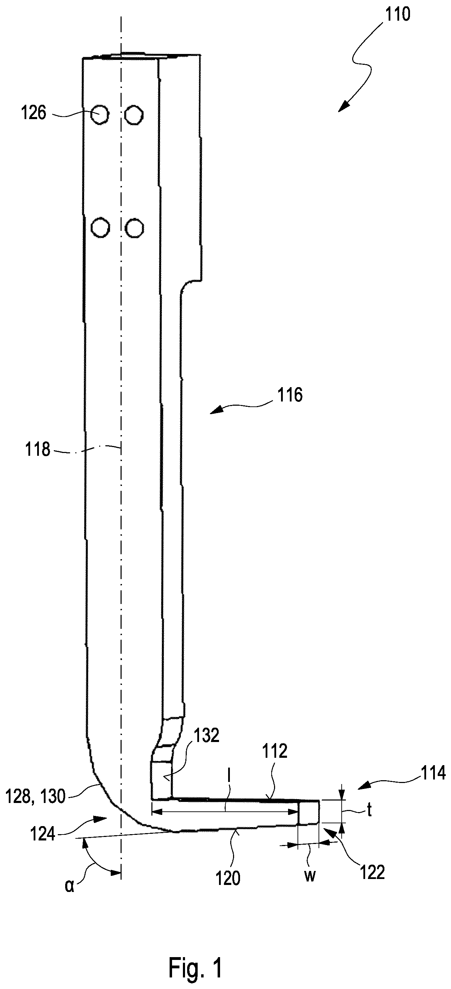

Figure 1 schematically illustrates a preferred embodiment of a first gripping element 110 of a gripping device according to the present invention. The first gripping element 110 is illustrated in a perspective view.

The first gripping element 110 comprises at least one first contact surface 112 for gripping a slide (not shown in Figure 1). The first contact surface 112 may be substantially plane. The first contact surface 112 of the first gripping element 110 may have a rectangular base shape. The first contact surface 112 may have a length *l* and a width w, wherein the length l exceeds the width w by at least a factor of 1.5.

The first gripping element 110 may comprise at least one first contact component 114 having the first contact surface 112 and at least one first guiding component 116 being configured for guiding the first contact component 114. The first contact component 114 and the first guiding component 116 may exemplarily be manufactured as one single piece.

The first guiding component 116 may be an elongate element. The first contact surface 112 may be arranged essentially perpendicular to a longitudinal axis 118 of the first guiding component 116.

The first contact component 114 may comprise at least one surface 120 opposing the first contact surface 112. The surface 120 may be arranged at an angle α smaller than 90° to the longitudinal axis 118 of the first guiding component 116 .

The first contact component 114 may comprise at least one first end 122 and at least one opposing second end 124. The first guiding component 114 may be attached to the first contact component 114 on the second end 124. A thickness t of the first contact component 114 may gradually decrease from the second end 124 to the first end 122.

The first guiding component 116 may be configured for attachment to at least one actuator (not shown) configured for enabling a linear movement of the first gripping element 110. For this purpose, the first guiding component may comprise at least one hole 126 for attachment of the first gripping element 110 to the actuator.

A connecting area 128 between the first contact component 114 and the first guiding component 116 may comprise at least one rounded corner 130.

The first gripping element 110 may comprise at least one further contact surface 132. The further contact surface 132 may be arranged essentially perpendicular to the first contact surface 112. The further contact surface 132 may be configured for providing a counterforce for the slide. The further contact surface 132 may be a surface of the first guiding component 116. The first guiding component 116 may be tapered in an area of the further contact surface 132.

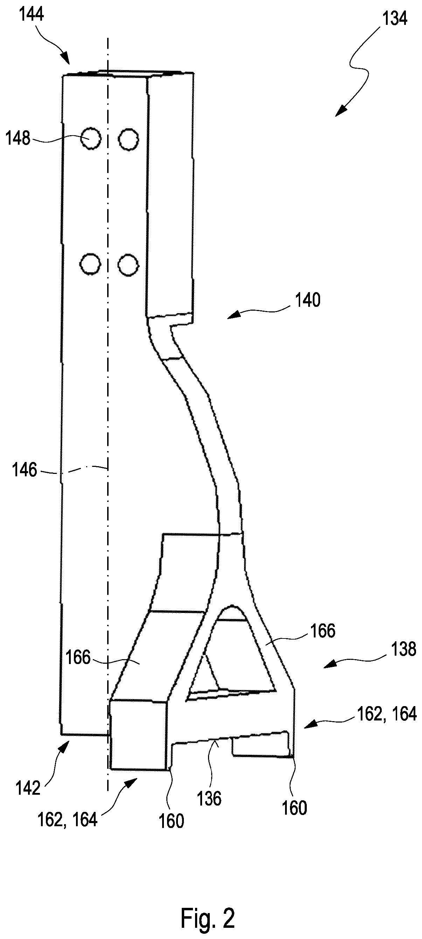

Figure 2 schematically illustrates a preferred embodiment of a second gripping element 134 of a gripping device according to the present invention. The second gripping element 134 is illustrated in a perspective view.

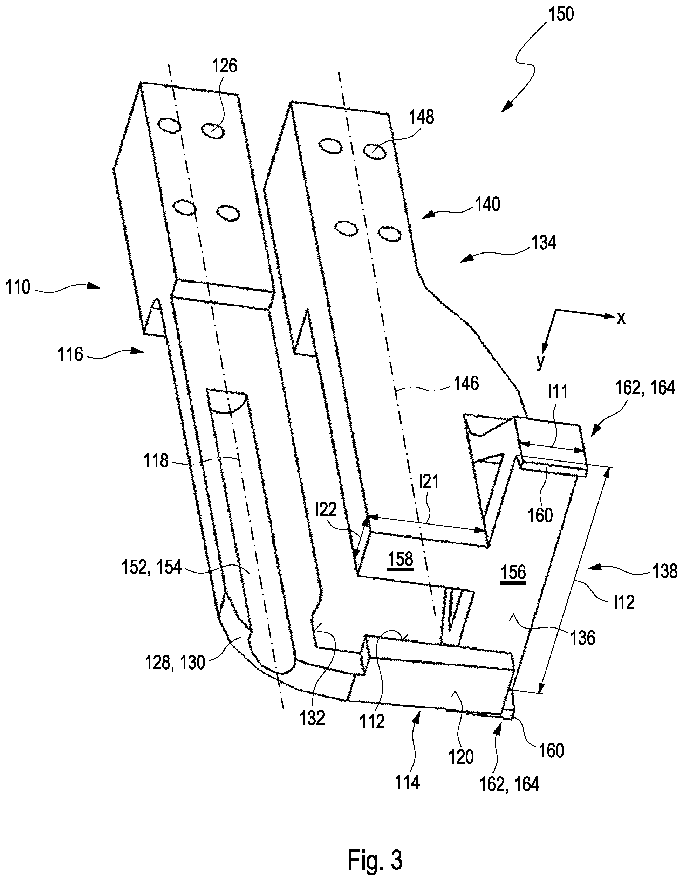

The second gripping element 134 comprises at least one second contact surface 136 for gripping a slide (not shown in Figure 2). The second contact surface 136 may be substantially plane. A detailed view on the second contact surface 136 is provided in Figure 3.

The second gripping element 134 may comprise at least one second contact component 138 having the second contact surface 136 and at least one second guiding component 140 being configured for guiding the second contact component 138. The second contact component 138 and the second guiding component 140 may be attached to each other, preferably materially bonded.

The second guiding component 140 may be an elongate element. The second guiding element 140 may comprise at least one first end 142 and at least one opposing second end 144. The second contact surface 136 may be arranged at the first end 142 of the second guiding element 140.The second guiding component 138 may taper from the first end 142 to the second end 144.

The second contact surface 136 may be arranged essentially perpendicular to a longitudinal axis 146 of the second guiding component 140.

The second guiding component 140 may be configured for attachment to at least one actuator (not shown) configured for enabling a linear movement of the second gripping element. For this purpose, the second guiding component 140 may comprise at least one hole 148 for attachment of the second guiding component 140 to the actuator.

Figure 3 schematically illustrates a preferred embodiment of a gripping device 150 according to the present invention. The gripping device 150 is illustrated in a perspective view. The gripping device 150 comprises at least one first gripping element 110 and at least one second gripping element 134. The first gripping element 110 corresponds to the first gripping element 110 as illustrated in Figure 1. Thus, reference is made to the description of Figure 1 above. The second gripping element 134 corresponds to the second gripping element 134 as illustrated in Figure 2. Thus, reference is made to the description of Figure 2 above.

Figure 3 enables a different view on the first guiding component 116 of the first gripping element 110. As illustrated in Figure 3, the first guiding component 116 may comprise at least one hole 152 , specifically at least one drill hole 154. The hole 152 may extend along the longitudinal axis 118 of the first guiding component 116.

Further, Figure 3 enables a detailed view on the second contact surface 136 of the second gripping element 134. The second contact surface 136 may essentially have a T-shape. The second contact surface 136 may extend in a plane being defined by an axis x and an axis y which are arranged perpendicular to each other. The second contact surface 136 may comprise at least one first area 156 and at least one second area 158. The first area 156 and the second area 158 may respectively have different lengths along the axis x and the axis y. The first area 156 and the second area 158 may respectively have an essentially rectangular shape. The second area 158 may be centered aligned to the first area 156. The second area 158 may be configured for distributing a holding force on the slide. The first area 156 may have a length *l₁₁* along the axis x and a length *l₁₂* along the axis y. The second area 158 may have a length *l₂₁* along the axis x and a length *l₂₂* along the axis y. The length *l₂₁* may be larger than the length *l₁₁,* specifically by at least a factor of 1.9. The length *l₁₂* may be larger than the length *l₂₂,* specifically by at least a factor of 5. The length *l₁₂* may be larger than the length *l₁₁,* specifically by at least a factor of 3.5. The length *l₂₁* may be larger than the length *l₂₂,* specifically by at least a factor of 2.5. The length *l₁₂* may be essentially equal to a width of the slide.

The second gripping element 134 further comprises at least two protrusions 160 which respectively extend essentially perpendicular to the second contact surface 136. The protrusions 160 are visible in Figures 2 and 3. The at least two protrusions 160 are located on opposing ends 162 of the second contact surface 136. The at least two protrusions 160 are configured for centering the slide during gripping the slide via the gripping device 150. A distance between the at least two protrusions 160 may be essentially equal to a width of the slide. The at least two protrusions 160 may be located on opposing ends 164 of the first area 156. The first area 156 may be connected to the second guiding component 138 via bars 166 extending transverse to the longitudinal axis 146. Specifically, the ends 164 of the first area 156 may respectively be connected to the second guiding component 140 via the bars 166.

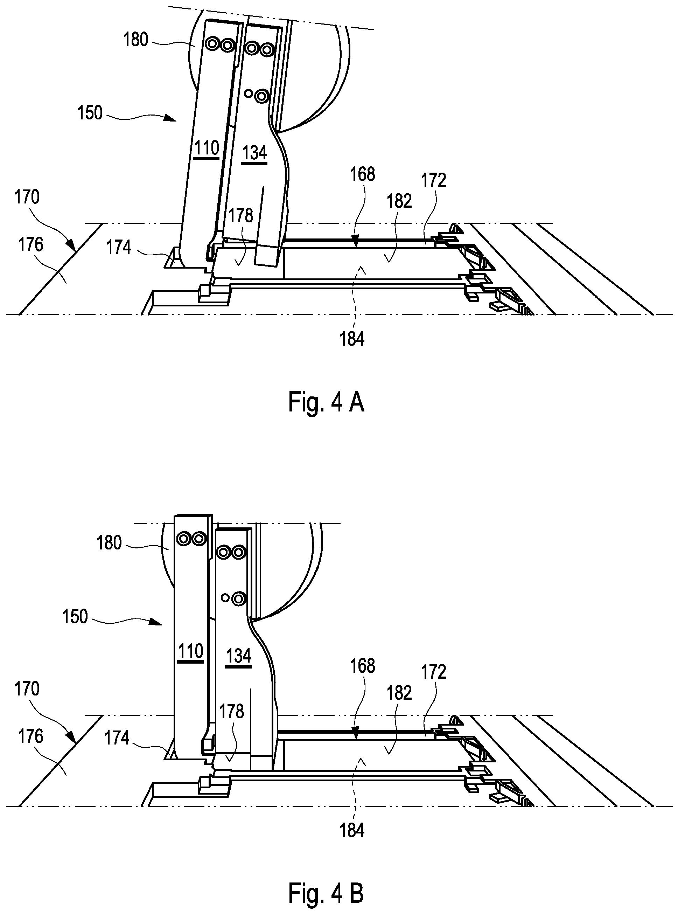

Figures 4A to 4C illustrate an exemplary embodiment of a method for gripping a slide 168 according to the present invention. The gripping device 150 as illustrated in Figures 4A to 4C corresponds to the gripping device 150 as illustrated in Figure 3. Thus, reference to the description of Figure 3 above is made.

As illustrated in Figure 4A, a slide 168 may be received in a slide tray 170. The slide 168 may be received in a receptacle 172 of the slide tray 170. There may be gap 174 between a frame 176 of the slide tray 170 and an end face 178 of the slide 168. The slide 168 may have a sample surface 182 and an opposing rear surface 184.

As further illustrated in Figure 4A, the gripping device 150 is provided and the first contact surface 112 of the first gripping element 110 and the second contact surface 136 of the second gripping element 134 are arranged in a distance to each other. The gripping device 150 is moved such that the slide 168 is arranged between the first contact surface 112 and the second contact surface 136, specifically via the gap 174. The gripping device 150 may be moved via a robotic arm 180. Specially, the first contact surface 112 of the first gripping element 110 may be brought underneath the rear surface 184 of the slide 168 on the end face 178 of the slide 168.

As illustrated in Figure 4A, at least one first tilting movement of the gripping device 150, specifically of the first contact surface 112 and the second contact surface 136, such that the slide 168 is arranged between the first contact surface 112 and the second contact surface 136 may be performed. The first tiling movement may be performed by the robotic arm 180.

As illustrated in Figure 4B, the gripping device 150 may be moved such that when the slide 168 is gripped via the first contact surface 112 and the second contact surface 136 the slide 168 is arranged in a distance to the further contact surface 132.

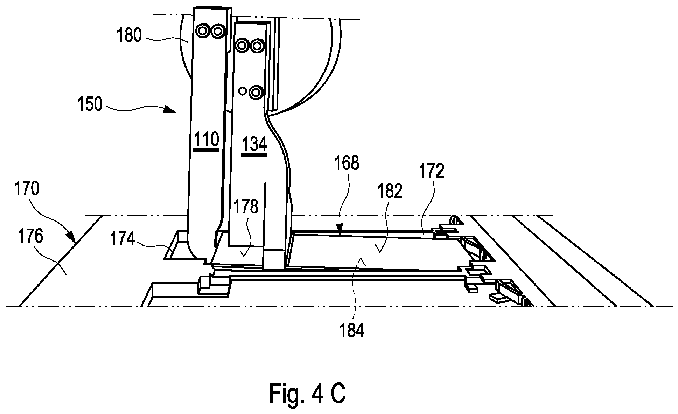

Thereafter, as illustrated in Figure 4C, a contact between the second contact surface 136 and the slide 168 may be released, specifically by moving the second gripping element 134, and the gripping device 150 may be moved in a direction towards the slide 168 such that when the slide 168 is gripped again via the first contact surface 112 and the second contact surface 136 the slide 168 is in direct contact with the further contact surface 132.

### List of reference numbers

- 110: first gripping element
- 112: first contact surface
- 114: first contact component
- 116: first guiding component
- 118: longitudinal axis
- 120: surface
- 122: first end
- 124: second end
- 126: hole
- 128: connecting area
- 130: rounded corner
- 132: further contact surface
- 134: second gripping element
- 136: second contact surface
- 138: second contact component
- 140: second guiding component
- 142: first end
- 144: second end
- 146: longitudinal axis
- 148: hole
- 150: gripping device
- 152: hole
- 154: drill hole
- 156: first area
- 158: second area
- 160: protrusion
- 162: end
- 164: end
- 166: bar
- 168: slide
- 170: slide tray
- 172: receptacle
- 174: gap
- 176: frame
- 178: end face
- 180: robotic arm
- 182: sample surface
- 184: rear surface

## Claims

1. A gripping device (150) configured for gripping at least one slide (168), wherein the gripping device (150) comprises:
• at least one first gripping element (110), wherein the first gripping element (110) comprises at least one first contact surface (112) for gripping the slide (168);
• at least one second gripping element (134), wherein the second gripping element (134) comprises at least one second contact surface (136) for gripping the slide (168), wherein the second gripping element (134) further comprises at least two protrusions (160) which respectively extend essentially perpendicular to the second contact surface (136), wherein the at least two protrusions (160) are located on opposing ends (162) of the second contact surface (136), wherein the at least two protrusions (160) are configured for centering the slide (168) during gripping the slide (168) via the gripping device (150);
wherein the first gripping element (110) and the second gripping element (134) are linearly movable relative to one another, wherein the first contact surface (112) of the first gripping element (110) and the second contact surface (136) of the second gripping element (134) face each other, wherein the slide (168) comprises at least one sample surface (182) being configured for receiving at least one sample and at least one opposing rear surface (184), wherein the first contact surface (112) of the first gripping element (110) is configured to get in contact with the rear surface (184), wherein the second contact surface (136) of the second gripping element (134) is configured to get in contact with the sample surface (182), wherein the second contact surface (136) essentially has a T-shape.

2. The gripping device (150) according to the preceding claim, wherein the first gripping element (110) comprises at least one first contact component (114) having the first contact surface (112) and at least one first guiding component (116) being configured for guiding the first contact component (114), wherein the first contact surface (112) is arranged essentially perpendicular to a longitudinal axis (118) of the first guiding component (116).

3. The gripping device (150) according to the preceding claim, wherein the first contact component (114) comprises at least one surface (120) opposing the first contact surface (112), wherein the surface (120) is arranged at an angle smaller than 90° to the longitudinal axis (118) of the first guiding component (116).

4. The gripping device (150) according to any one of the two preceding claims, wherein the first gripping element (110) comprises at least one further contact surface (132), wherein the further contact surface (132) is arranged essentially perpendicular to the first contact surface (112), wherein the further contact surface (132) is configured for providing a counterforce for the slide (168).

5. The gripping device (150) according to any one of the preceding claims, wherein the second contact surface (136) extends in a plane being defined by an axis x and an axis y which are arranged perpendicular to each other, wherein the second contact surface (136) comprises at least one first area (156) and at least one second area (158), wherein the first area (156) and the second area (158) respectively have different lengths along the axis x and the axis y, wherein the first area (156) and the second area (158) respectively have an essentially rectangular shape, wherein the second area (158) is centered aligned to the first area (156).

6. The gripping device (150) according to the preceding claim, wherein the at least two protrusions (160) are located on opposing ends of the first area (156).

7. A slide transfer apparatus, wherein the slide transfer apparatus comprises:
• at least one storage device, wherein the storage device is loadable with a plurality of slides (168) and configured to store the slides (168);
• at least one receiving device, wherein the receiving device is configured to receive slides (168) transferred from the storage device; and
• at least one transfer device, wherein the transfer device is configured to transfer the slides (168) from the storage device to the receiving device, wherein the transfer device comprises at least one robotic arm, wherein at least one gripping device (150) according to any one of the preceding claims is arranged at the robotic arm.

8. A slide imaging apparatus, wherein the slide imaging apparatus comprises:
• at least one slide transfer apparatus according to the preceding claim; and
• at least one imaging device configured to generate an image of a sample mounted on a slide (168).

9. A method for gripping at least one slide (168), wherein the method comprises:
a) providing at least one gripping device (150) according to any one of the preceding claims referring to a gripping device (150), wherein the first contact surface (112) of the first gripping element (110) and the second contact surface (136) of the second gripping element (134) are arranged in a distance to each other;
b) moving the gripping device (150) such that the slide (168) is arranged between the first contact surface (112) and the second contact surface (136); and
c) gripping the slide (168) via the first contact surface (112) and the second contact surface (136).

10. The method according to the preceding claim, wherein in step b) at least one tilting movement of the first contact surface (112) and the second contact surface (136) is performed, wherein step b) comprises the following steps:
b1) performing at least one first tilting movement of the gripping device (150) such that the slide (168) is arranged between the first contact surface (112) and the second contact surface (136); and
b2) performing at least one second tilting movement of the gripping device (150) such that the first contact surface (112) and the second contact surface (136) are respectively aligned essentially parallel to the slide (168).

11. The method according to any one of the two preceding claims, wherein the first gripping element (110) comprises at least one further contact surface (132), wherein the further contact surface (132) is arranged essentially perpendicular to the first contact surface (112), wherein in step b) the gripping device (150) is moved such that when the slide (168) is gripped via the first contact surface (112) and the second contact surface (136) in step c) the slide (168) is arranged in a distance to the further contact surface (132), wherein after conducting step c), the following steps are conducted:
d1) a contact between the second contact surface (136) and the slide (168) is released;
d2) the gripping device (150) is moved in a direction towards the slide (168) such that when the slide (168) is gripped again via the first contact surface (112) and the second contact surface (136) the slide (168) is in direct contact with the further contact surface; and
d3) gripping the slide (168) via the first contact surface (112) and the second contact surface (136).

12. A method for releasing at least one slide (168), wherein the method comprises:
i. providing at least one gripping device (150) according to any one of the preceding claims referring to a gripping device (150), wherein at least one slide (168) is gripped via the first contact surface (112) of the first gripping element (110) and the second contact surface (136) of the second gripping element (134);
ii. placing the slide (168) into a receptacle of a slide tray (170);
iii. increasing a distance between the first contact surface (112) and the second contact surface (136); and
iv. removing the gripping device (150) from the slide (168).

13. A method for transferring at least one slide (168) from at least one storage device to at least one receiving device, wherein the method comprises:
I. providing the least one slide (168) in the storage device;
II. gripping the at least one slide (168) via the method for gripping at least one slide (168) according to any one of claims 9 to 11;
III. moving the at least one slide (168) from the storage device to the receiving device; and
IV. releasing the at least one slide (168) via the method for releasing at least one slide (168) according to claim 13.

14. A method for imaging a plurality of slides (168), comprising the steps:
A. loading a plurality of slides (168) into a storage device and storing the slides (168) in the storage device;
B. transferring the slides (168) from the storage device to a receiving device via the method for transferring at least one slide (168) according to claim 13; and
C. generating an image of a sample mounted on the slide (168) using the imaging device.

## Patentansprüche

1. Greifvorrichtung (150), die zum Greifen mindestens eines Objektträgers (168) konfiguriert ist, wobei die Greifvorrichtung (150) Folgendes umfasst:
• mindestens ein erstes Greifelement (110), wobei das erste Greifelement (110) mindestens eine erste Kontaktfläche (112) zum Greifen des Objektträgers (168) umfasst;
• mindestens ein zweites Greifelement (134), wobei das zweite Greifelement (134) mindestens eine zweite Kontaktfläche (136) zum Greifen des Objektträgers (168) umfasst, wobei das zweite Greifelement (134) ferner mindestens zwei Vorsprünge (160) umfasst, die sich jeweils im Wesentlichen senkrecht zur zweiten Kontaktfläche (136) erstrecken, wobei sich die mindestens zwei Vorsprünge (160) an gegenüberliegenden Enden (162) der zweiten Kontaktfläche (136) befinden, wobei die mindestens zwei Vorsprünge (160) zum Zentrieren des Objektträgers (168) während des Greifens des Objektträgers (168) über die Greifvorrichtung (150) konfiguriert sind;
wobei das erste Greifelement (110) und das zweite Greifelement (134) relativ zueinander linear beweglich sind, wobei die erste Kontaktfläche (112) des ersten Greifelements (110) und die zweite Kontaktfläche (136) des zweiten Greifelements (134) einander zugewandt sind, wobei der Objektträger (168) mindestens eine Probenfläche (182), die zum Aufnehmen mindestens einer Probe konfiguriert ist, und mindestens eine gegenüberliegende Rückfläche (184) umfasst, wobei die erste Kontaktfläche (112) des ersten Greifelements (110) konfiguriert ist, um mit der Rückfläche (184) in Kontakt zu kommen, wobei die zweite Kontaktfläche (136) des zweiten Greifelements (134) konfiguriert ist, um mit der Probenfläche (182) in Kontakt zu kommen, wobei die zweite Kontaktfläche (136) im Wesentlichen eine T-Form aufweist.

2. Greifvorrichtung (150) nach dem vorhergehenden Anspruch, wobei das erste Greifelement (110) mindestens eine erste Kontaktkomponente (114), die die erste Kontaktfläche (112) aufweist, und mindestens eine erste Führungskomponente (116), die zum Führen der ersten Kontaktkomponente (114) konfiguriert ist, umfasst, wobei die erste Kontaktfläche (112) im Wesentlichen senkrecht zu einer Längsachse (118) der ersten Führungskomponente (116) angeordnet ist.

3. Greifvorrichtung (150) nach dem vorhergehenden Anspruch, wobei die erste Kontaktkomponente (114) mindestens eine Fläche (120) gegenüber der ersten Kontaktfläche (112) umfasst, wobei die Fläche (120) in einem Winkel kleiner als 90° zur Längsachse (118) der ersten Führungskomponente (116) angeordnet ist.

4. Greifvorrichtung (150) nach einem der zwei vorhergehenden Ansprüche, wobei das erste Greifelement (110) mindestens eine weitere Kontaktfläche (132) umfasst, wobei die weitere Kontaktfläche (132) im Wesentlichen senkrecht zur ersten Kontaktfläche (112) angeordnet ist, wobei die weitere Kontaktfläche (132) zum Bereitstellen einer Gegenkraft für den Objektträger (168) konfiguriert ist.

5. Greifvorrichtung (150) nach einem der vorhergehenden Ansprüche, wobei sich die zweite Kontaktfläche (136) in einer Ebene erstreckt, die durch eine Achse x und eine Achse y definiert ist, die senkrecht zueinander angeordnet sind, wobei die zweite Kontaktfläche (136) mindestens einen ersten Bereich (156) und mindestens einen zweiten Bereich (158) umfasst, wobei der erste Bereich (156) und der zweite Bereich (158) jeweils unterschiedliche Längen entlang der Achse x und der Achse y aufweisen, wobei der erste Bereich (156) und der zweite Bereich (158) jeweils eine im Wesentlichen rechteckige Form aufweisen, wobei der zweite Bereich (158) zentriert auf den ersten Bereich (156) ausgerichtet ist.

6. Greifvorrichtung (150) nach dem vorhergehenden Anspruch, wobei sich die mindestens zwei Vorsprünge (160) an gegenüberliegenden Enden des ersten Bereichs (156) befinden.

7. Objektträgertransfergerät, wobei das Objektträgertransfergerät Folgendes umfasst:
• mindestens eine Lagervorrichtung, wobei die Lagervorrichtung mit einer Vielzahl von Objektträgern (168) beladbar und zum Lagern der Objektträger (168) konfiguriert ist;
• mindestens eine Aufnahmevorrichtung, wobei die Aufnahmevorrichtung zum Aufnehmen von Objektträgern (168) konfiguriert ist, die von der Lagervorrichtung transferiert werden; und
• mindestens eine Transfervorrichtung, wobei die Transfervorrichtung zum Transferieren der Objektträger (168) von der Lagervorrichtung zur Aufnahmevorrichtung konfiguriert ist, wobei die Transfervorrichtung mindestens einen Roboterarm umfasst, wobei mindestens eine Greifvorrichtung (150) nach einem der vorhergehenden Ansprüche am Roboterarm angeordnet ist.

8. Objektträgerabbildungsgerät, wobei das Objektträgerabbildungsgerät Folgendes umfasst:
• mindestens ein Objektträgertransfergerät nach dem vorhergehenden Anspruch; und
• mindestens eine Abbildungsvorrichtung, die zum Erzeugen eines Bildes einer Probe konfiguriert ist, die auf einem Objektträger (168) aufgezogen ist.

9. Verfahren zum Greifen mindestens eines Objektträgers (168), wobei das Verfahren Folgendes umfasst:
a) Bereitstellen mindestens einer Greifvorrichtung (150) nach einem der vorhergehenden Ansprüche, die sich auf eine Greifvorrichtung (150) beziehen, wobei die erste Kontaktfläche (112) des ersten Greifelements (110) und die zweite Kontaktfläche (136) des zweiten Greifelements (134) in einem Abstand zueinander angeordnet sind;
b) Bewegen der Greifvorrichtung (150) derart, dass der Objektträger (168) zwischen der ersten Kontaktfläche (112) und der zweiten Kontaktfläche (136) angeordnet ist; und
c) Greifen des Objektträgers (168) über die erste Kontaktfläche (112) und die zweite Kontaktfläche (136).

10. Verfahren nach dem vorhergehenden Anspruch, wobei in Schritt b) mindestens eine Kippbewegung der ersten Kontaktfläche (112) und der zweiten Kontaktfläche (136) durchgeführt wird, wobei Schritt b) die folgenden Schritte umfasst:
b1) Durchführen mindestens einer ersten Kippbewegung der Greifvorrichtung (150) derart, dass der Objektträger (168) zwischen der ersten Kontaktfläche (112) und der zweiten Kontaktfläche (136) angeordnet ist; und
b2) Durchführen mindestens einer zweiten Kippbewegung der Greifvorrichtung (150) derart, dass die erste Kontaktfläche (112) und die zweite Kontaktfläche (136) jeweils im Wesentlichen parallel zu dem Objektträger (168) ausgerichtet sind.

11. Verfahren nach einem der zwei vorhergehenden Ansprüche, wobei das erste Greifelement (110) mindestens eine weitere Kontaktfläche (132) umfasst, wobei die weitere Kontaktfläche (132) im Wesentlichen senkrecht zur ersten Kontaktfläche (112) angeordnet ist, wobei die Greifvorrichtung (150) in Schritt b) derart bewegt wird, dass, wenn der Objektträger (168) in Schritt c) über die erste Kontaktfläche (112) und die zweite Kontaktfläche (136) gegriffen wird, der Objektträger (168) in einem Abstand zur weiteren Kontaktfläche (132) angeordnet ist, wobei nach dem Durchführen von Schritt c) die folgenden Schritte durchgeführt werden:
d1) ein Kontakt zwischen der zweiten Kontaktfläche (136) und dem Objektträger (168) wird gelöst;
d2) die Greifvorrichtung (150) wird derart in eine Richtung auf den Objektträger (168) zu bewegt, dass der Objektträger (168) in direktem Kontakt mit der weiteren Kontaktfläche steht, wenn der Objektträger (168) wieder über die erste Kontaktfläche (112) und die zweite Kontaktfläche (136) gegriffen wird; und
d3) Greifen des Objektträgers (168) über die erste Kontaktfläche (112) und die zweite Kontaktfläche (136).

12. Verfahren zum Lösen mindestens eines Objektträgers (168), wobei das Verfahren Folgendes umfasst:
i. Bereitstellen mindestens einer Greifvorrichtung (150) nach einem der vorhergehenden Ansprüche, die sich auf eine Greifvorrichtung (150) beziehen, wobei mindestens ein Objektträger (168) über die erste Kontaktfläche (112) des ersten Greifelements (110) und die zweite Kontaktfläche (136) des zweiten Greifelements (134) gegriffen wird;
ii. Platzieren des Objektträgers (168) in eine Aufnahme einer Objektträgerablage (170);
iii. Vergrößern eines Abstands zwischen der ersten Kontaktfläche (112) und der zweiten Kontaktfläche (136); und
iv. Entfernen der Greifvorrichtung (150) von dem Objektträger (168).

13. Verfahren zum Transferieren mindestens eines Objektträgers (168) von mindestens einer Lagervorrichtung zu mindestens einer Aufnahmevorrichtung, wobei das Verfahren Folgendes umfasst:
I. Bereitstellen des mindestens einen Objektträgers (168) in der Lagervorrichtung;
II. Greifen des mindestens einen Objektträgers (168) mittels des Verfahrens zum Greifen mindestens eines Objektträgers (168) nach einem der Ansprüche 9 bis 11;
III. Bewegen des mindestens einen Objektträgers (168) von der Lagervorrichtung zur Aufnahmevorrichtung; und
IV. Lösen des mindestens einen Objektträgers (168) mittels des Verfahrens zum Lösen mindestens eines Objektträgers (168) nach Anspruch 13.

14. Verfahren zum Abbilden einer Vielzahl von Objektträgern (168), umfassend die folgenden Schritte:
A. Laden einer Vielzahl von Objektträgern (168) in eine Lagervorrichtung und Lagern der Objektträger (168) in der Lagervorrichtung;
B. Transferieren der Objektträger (168) von der Lagervorrichtung zu einer Aufnahmevorrichtung mittels des Verfahrens zum Transferieren mindestens eines Objektträgers (168) nach Anspruch 13; und
C. Erzeugen eines Bildes einer Probe, die auf dem Objektträger (168) aufgezogen ist, unter Verwendung der Abbildungsvorrichtung.

## Revendications

1. Dispositif de préhension (150) conçu pour saisir au moins une lame (168), dans lequel le dispositif de préhension (150) comprend :
• au moins un premier élément de préhension (110), le premier élément de préhension (110) comprenant au moins une première surface de contact (112) pour saisir la lame (168) ;
• au moins un deuxième élément de préhension (134), le deuxième élément de préhension (134) comprenant au moins une deuxième surface de contact (136) pour saisir la lame (168), le deuxième élément de préhension (134) comprenant en outre au moins deux saillies (160) qui s'étendent respectivement de manière essentiellement perpendiculaire à la deuxième surface de contact (136), les au moins deux saillies (160) étant situées sur des extrémités opposées (162) de la deuxième surface de contact (136), les au moins deux saillies (160) étant conçues pour centrer la lame (168) pendant la saisie de la lame (168) par l'intermédiaire du dispositif de préhension (150) ;
dans lequel le premier élément de préhension (110) et le deuxième élément de préhension (134) peuvent être déplacés linéairement l'un par rapport à l'autre, dans lequel la première surface de contact (112) du premier élément de préhension (110) et la deuxième surface de contact (136) du deuxième élément de préhension (134) se font face, dans lequel la lame (168) comprend au moins une surface de l'échantillon (182) conçue pour recevoir au moins un échantillon et au moins une surface arrière (184) opposée, dans lequel la première surface de contact (112) du premier élément de préhension (110) est conçue pour entrer en contact avec la surface arrière (184), dans lequel la deuxième surface de contact (136) du deuxième élément de préhension (134) est conçue pour entrer en contact avec la surface de l'échantillon (182), dans lequel la deuxième surface de contact (136) a essentiellement une forme en T.

2. Dispositif de préhension (150) selon la revendication précédente, dans lequel le premier élément de préhension (110) comprend au moins un premier composant de contact (114) ayant la première surface de contact (112) et au moins un premier composant de guidage (116) conçu pour guider le premier composant de contact (114), dans lequel la première surface de contact (112) est agencée de manière essentiellement perpendiculaire à un axe longitudinal (118) du premier composant de guidage (116).

3. Dispositif de préhension (150) selon la revendication précédente, dans lequel le premier composant de contact (114) comprend au moins une surface (120) opposée à la première surface de contact (112), dans lequel la surface (120) est agencée selon un angle inférieur à 90° par rapport à l'axe longitudinal (118) du premier composant de guidage (116).

4. Dispositif de préhension (150) selon l'une quelconque des deux revendications précédentes, dans lequel le premier élément de préhension (110) comprend au moins une surface de contact supplémentaire (132), dans lequel la surface de contact supplémentaire (132) est agencée de manière essentiellement perpendiculaire à la première surface de contact (112), dans lequel la surface de contact supplémentaire (132) est conçue pour fournir une contre-force pour la lame (168).

5. Dispositif de préhension (150) selon l'une quelconque des revendications précédentes, dans lequel la deuxième surface de contact (136) s'étend dans un plan défini par un axe x et un axe y qui sont agencés perpendiculairement l'un par rapport à l'autre, dans lequel la deuxième surface de contact (136) comprend au moins une première zone (156) et au moins une deuxième zone (158), dans lequel la première zone (156) et la deuxième zone (158) ont respectivement des longueurs différentes le long de l'axe x et de l'axe y, dans lequel la première zone (156) et la deuxième zone (158) ont respectivement une forme essentiellement rectangulaire, dans lequel la deuxième zone (158) est centrée alignée par rapport à la première zone (156).

6. Dispositif de préhension (150) selon la revendication précédente, dans lequel les au moins deux saillies (160) sont situées sur des extrémités opposées de la première zone (156).

7. Appareil de transfert de lames, dans lequel l'appareil de transfert de lames comprend :
• au moins un dispositif de stockage, le dispositif de stockage pouvant être chargé avec une pluralité de lames (168) et est conçu pour stocker les lames (168) ;
• au moins un dispositif de réception, le dispositif de réception étant conçu pour recevoir les lames (168) transférées du dispositif de stockage ; et
• au moins un dispositif de transfert, le dispositif de transfert étant conçu pour transférer les lames (168) du dispositif de stockage jusqu'au dispositif de réception, le dispositif de transfert comprenant au moins un bras robotisé, au moins un dispositif de préhension (150) selon l'une quelconque des revendications précédentes étant agencé au niveau du bras robotisé.

8. Appareil d'imagerie de lames, dans lequel l'appareil d'imagerie de lames comprend :
• au moins un appareil de transfert de lames selon la revendication précédente ; et
• au moins un dispositif d'imagerie conçu pour générer une image d'un échantillon monté sur une lame (168).

9. Procédé de saisie d'au moins une lame (168), dans lequel le procédé comprend :
a) la fourniture d'au moins un dispositif de préhension (150) selon l'une quelconque des revendications précédentes se référant à un dispositif de préhension (150), dans lequel la première surface de contact (112) du premier élément de préhension (110) et la deuxième surface de contact (136) du deuxième élément de préhension (134) sont agencées à une distance l'une de l'autre ;
b) le déplacement du dispositif de préhension (150) de telle sorte que la lame (168) est agencée entre la première surface de contact (112) et la deuxième surface de contact (136) ; et
c) la saisie de la lame (168) par l'intermédiaire de la première surface de contact (112) et de la deuxième surface de contact (136).

10. Procédé selon la revendication précédente, dans lequel dans l'étape b) au moins un mouvement d'inclinaison de la première surface de contact (112) et de la deuxième surface de contact (136) est réalisé, dans lequel l'étape b) comprend les étapes suivantes :
b1) réalisation d'au moins un premier mouvement d'inclinaison du dispositif de préhension (150) de telle sorte que la lame (168) est agencée entre la première surface de contact (112) et la deuxième surface de contact (136) ; et
b2) réalisation d'au moins un deuxième mouvement d'inclinaison du dispositif de préhension (150) de telle sorte que la première surface de contact (112) et la deuxième surface de contact (136) sont respectivement alignées de manière essentiellement parallèle à la lame (168).

11. Procédé selon l'une quelconque des deux revendications précédentes, dans lequel le premier élément de préhension (110) comprend au moins une surface de contact supplémentaire (132), dans lequel la surface de contact supplémentaire (132) est agencée de manière essentiellement perpendiculaire à la première surface de contact (112), dans lequel dans l'étape b) le dispositif de préhension (150) est déplacé de telle sorte que lorsque la lame (168) est saisie par l'intermédiaire de la première surface de contact (112) et de la deuxième surface de contact (136) dans l'étape c) la lame (168) est agencée à une distance de la surface de contact supplémentaire (132), dans lequel après la mise en œuvre de l'étape c), les étapes suivantes sont mises en œuvre :
d1) un contact entre la deuxième surface de contact (136) et la lame (168) est libéré ;
d2) le dispositif de préhension (150) est déplacé dans une direction vers la lame (168) de telle sorte que lorsque la lame (168) est à nouveau saisie par l'intermédiaire de la première surface de contact (112) et de la deuxième surface de contact (136) la lame (168) est en contact direct avec la surface de contact supplémentaire ; et
d3) la saisie de la lame (168) par l'intermédiaire de la première surface de contact (112) et de la deuxième surface de contact (136).

12. Procédé de libération d'au moins une lame (168), dans lequel le procédé comprend :
i. la fourniture d'au moins un dispositif de préhension (150) selon l'une quelconque des revendications précédentes se référant à un dispositif de préhension (150), au moins une lame (168) étant saisie par l'intermédiaire de la première surface de contact (112) du premier élément de préhension (110) et de la deuxième surface de contact (136) du deuxième élément de préhension (134) ;
ii. le placement de la lame (168) dans un réceptacle d'un plateau porte-lames (170) ;
iii. l'augmentation d'une distance entre la première surface de contact (112) et la deuxième surface de contact (136) ; et
iv. le retrait du dispositif de préhension (150) de la lame (168).

13. Procédé de transfert d'au moins une lame (168) d'au moins un dispositif de stockage jusqu'à au moins un dispositif de réception, dans lequel le procédé comprend :
I. la fourniture de l'au moins une lame (168) dans le dispositif de stockage ;
II. la saisie de l'au moins une lame (168) par l'intermédiaire du procédé de préhension d'au moins une lame (168) selon l'une quelconque des revendications 9 à 11 ;
III. le déplacement de l'au moins une lame (168) du dispositif de stockage jusqu'au dispositif de réception ; et
IV. la libération de l'au moins une lame (168) par l'intermédiaire du procédé pour libérer l'au moins une lame (168) selon la revendication 13.

14. Procédé d'imagerie d'une pluralité de lames (168), comprenant les étapes :
A. chargement d'une pluralité de lames (168) dans un dispositif de stockage et stockage des lames (168) dans le dispositif de stockage ;
B. transfert des lames (168) du dispositif de stockage jusqu'à un dispositif de réception par l'intermédiaire du procédé de transfert d'au moins une lame (168) selon la revendication 13 ; et
C. génération d'une image d'un échantillon monté sur la lame (168) en utilisant le dispositif d'imagerie.
